# EUROPEAN PATENT SPECIFICATION

(11) **EP 2 570 215 B1**
(45) Date of publication and mention of the grant of the patent: **01.06.2016**
(21) Application number: 12181512.0
(22) Date of filing: 23.08.2012
(51) Int. Cl.: B23D 45/04, B27B 5/29, B23D 47/02, B27B 5/16

(54) **Power saw**
Angetriebene Säge
Scie électrique

(30) Priority: 14.09.2011 GB 201115894
(43) Date of publication of application: 20.03.2013
(73) Proprietor: Black & Decker Inc., Newark, Delaware 19711 (US)
(72) Inventor: Spinelli, Luigi, Perugia, Cap 06126 (IT)
(74) Representative: Bell, Ian Stephen

(56) References cited:
- US-A1- 2005 262 983

## Description

The present invention relates to power saws, and relates particularly, but not exclusively, to mitre saws.

Mitre saws generally have a base for supporting a workpiece and a circular saw assembly, pivotable about a generally horizontal axis relative to the base to move the saw blade between a raised position and a cutting position, and the base may include a turntable pivotable about a generally vertical axis to adjust the angle of the workpiece relative to the saw blade.

EP 1287954 discloses a compound mitre saw in which workpiece support extensions are mounted to each side of a base to provide additional support to a workpiece during a cutting operation. However, this arrangement suffers from the drawback that the extensions can become damaged if used as carrying handles for the saw, and because the extensions are substantially coplanar with the base, it becomes difficult to ergonomically lift the saw.

EP 1614508 discloses a mitre saw having a base assembly having supporting legs which are pivotable relative to a saw table to enable the legs to be used as carrying handles. However, this arrangement also suffers from the drawback that it is difficult to ergonomically lift the saw. US 2005/0262983 discloses a power saw according to the preamble of claim 1.

Preferred embodiments of the present invention seek to overcome one or more of the above disadvantages of the prior art.

According to claim 1, there is provided a power saw comprising:-a first support member for supporting a workpiece;
a saw assembly pivotably mounted relative to the first support member and moveable between a raised position and at least one cutting position to enable a saw blade of the saw assembly to engage a workpiece supported by the first support member;
a motor for driving a saw blade of the saw assembly; and
at least one second support member pivotably mounted relative to said first support member and moveable relative to the first support member between at least two of:-
(i) a respective first position in which at least part of said second support member is adapted to be used as a carrying handle for the power saw;
(ii) a respective second position in which the second support member is adapted to support a workpiece for cutting by the saw assembly; and
(iii) a respective third position in which the second support member is adapted to support the first support member on a floor in a raised position compared to when the second support member is in the first or second position thereof.
(iv)

By providing at least one second support member moveable relative to the first support member between at least two of a respective first position providing a carrying handle for the power saw, a respective second position in which the second support member support a workpiece, and a respective third position in which the second support member supports the first support member in a raised position, this provides the advantage of enabling more ergonomic use of the saw, either by enabling the second support member to be moved into a first position thereof in which the second support member is more ergonomically located than in the second position to act as a carrying handle, or a third position thereof in which the second support member enables the first support member to be in a raised position.

The power saw may comprise a plurality of said second support members such that said second support members in respective said second positions thereof and said first support member are adapted to support a workpiece.

This provides the advantage of enabling more stable support of a large workpiece.

The power saw may comprise a plurality of said second support members, wherein a plurality of said second support members in respective said second positions thereof are adapted to extend substantially horizontally from said first support member in use.

At least one said second support member may comprise a respective body having a respective first portion pivotably mounted relative to the first support member, a respective second portion spaced from said first portion and adapted to support a workpiece in said second position thereof, and a respective third portion connecting said first and second portions.

This provides the advantage of enabling the second support members to be easily constructed and to reduce the cost of manufacture of the power saw.

At least one said second support member may be tubular.

This provides the advantage of enabling easy and lightweight manufacture of the second support member, thereby reducing the cost of manufacture of the power saw and making it easier to transport.

At least one said second support member may be adapted to be locked in said first and/or said second and/or said third position thereof.

At least one said second support member may be adapted to be locked in said first and/or said second and/or said third position thereof by means of a respective clamping mechanism.

The power saw may comprise a plurality of said second support members mounted to opposite ends of rods extending through apertures through said first support member.

This provides the advantage of enabling more robust construction of the power saw.

Preferred embodiments of the invention will now be described, by way of example only and not in any limitative sense, with reference to the accompanying drawings, in which:-
Figure 1 is a perspective view of a mitre saw of a first embodiment of the present invention with carrying handles thereof arranged in a first position;
Figure 2 is a view of the saw of Figure 1 with carrying handles thereof in a second position and supporting a workpiece;
Figure 3 is a perspective view of a mitre saw of a second embodiment of the present invention having carry handles thereof in a second position and supporting a workpiece; and
Figure 4 is a perspective view of the saw of Figure 3 with the carry handles thereof in the third position supporting a workpiece in a raised position.

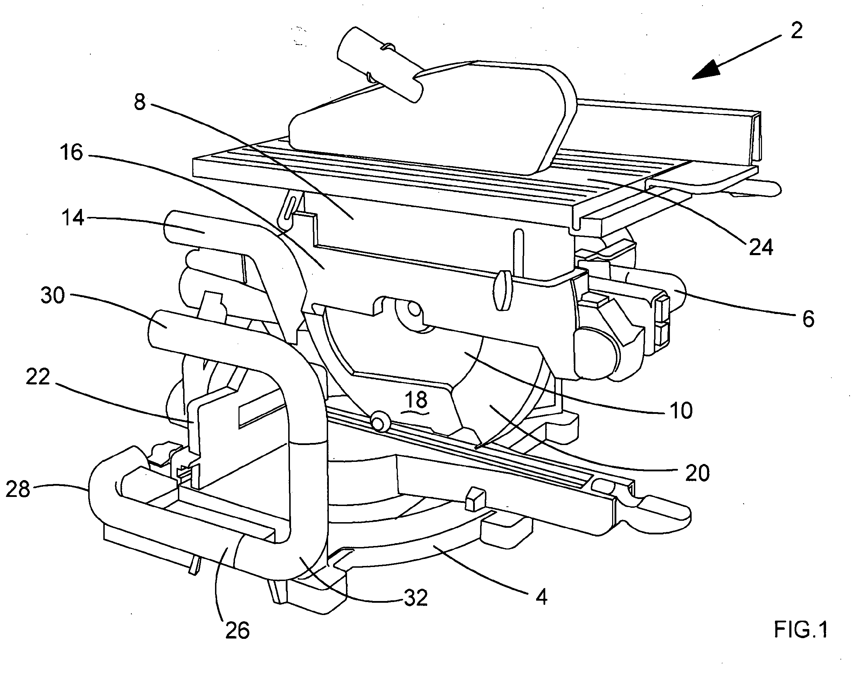

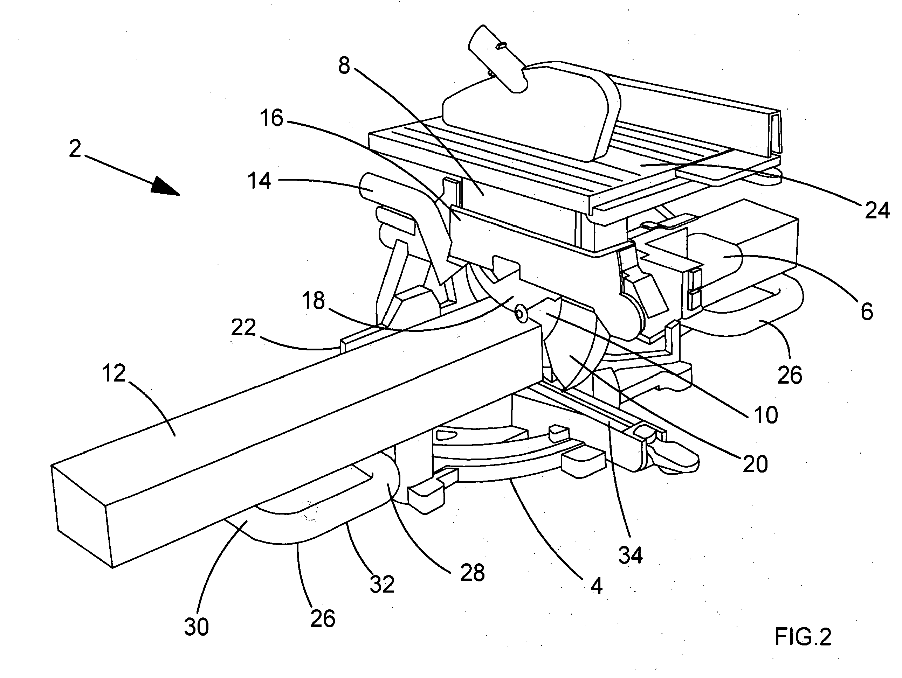

Referring to Figures 1 and 2, a mitre saw 2 has a base assembly 4 to which a motor unit 6 supporting a saw assembly 8 is pivotably mounted so that a circular saw blade 10 can move towards or away from a workpiece 12 (Figure 2) supported on the base assembly 4 to perform chop cuts. The motor unit 6 is pivotably mounted on a mount 14 to enable it to pivot towards and away from the base assembly 4, and the mount 14 is pivotably mounted about a horizontal axis on the base assembly 4 to perform bevel cuts.

The saw assembly 8 has a fixed guard 16 attached to the motor unit 6 and surrounding a middle section of the saw blade 10, and a pair of pivotable guards 18, 20 pivotably mounted on the motor unit 6 and surrounding the cutting edge of the blade 10 when the saw assembly 8 is in its upper position. The pivotable guards 18, 20 can be pivoted about an axis into the fixed guard 16 by movement of the saw assembly 8 to its lower position to expose the cutting edge of the blade 10 as the blade 10 is lowered relative to the base assembly 4. A fence 22 for engaging the workpiece 12 is mounted on the base assembly 4, and a table 24 is mounted on top of the motor unit 6.

A carrying handle in the form of a tubular pipe 26 bent into a U-shape is pivotably attached to each side of the base assembly 4. The pipes 26 are pivotable relative to the base assembly 4 between respective first positions as shown in Figure 1 in which the pipes 26 can be used as handles to carry the saw 2 and respective horizontal positions as shown in Figure 2 in which the pipes 26 provide an extension to the base assembly 4. Each pipe 26 has a respective first part 28 pivotably mounted to the base assembly 4, a respective second part 30 which can be used as a carrying handle when located in a position higher than the base assembly 4 as shown in Figure 1, and a respective third part 32 connecting the first part 28 and second part 30. The thickness of the pipes 26 is substantially the same as the height of the work surface 34 of the base assembly 4, as a result of which the workpiece 12 as shown in Figure 2 can be laid across and supported by the pipes 26 and base assembly 4. The pipes 26 can also be further pivoted into a third position in which the respective second parts 30 of the pipes 26 can be used to support the base assembly 4 at a higher position than in the position shown in Figure 2.

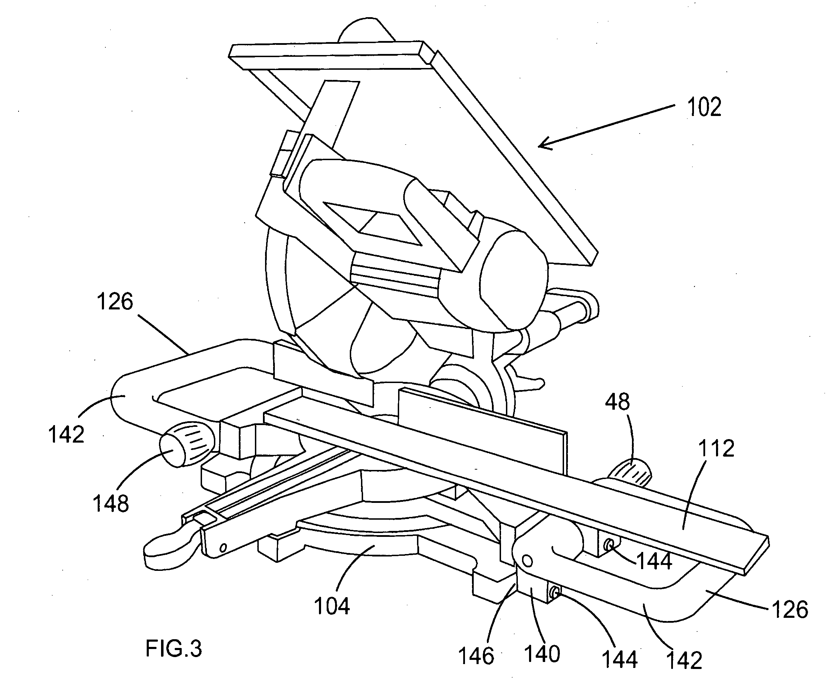

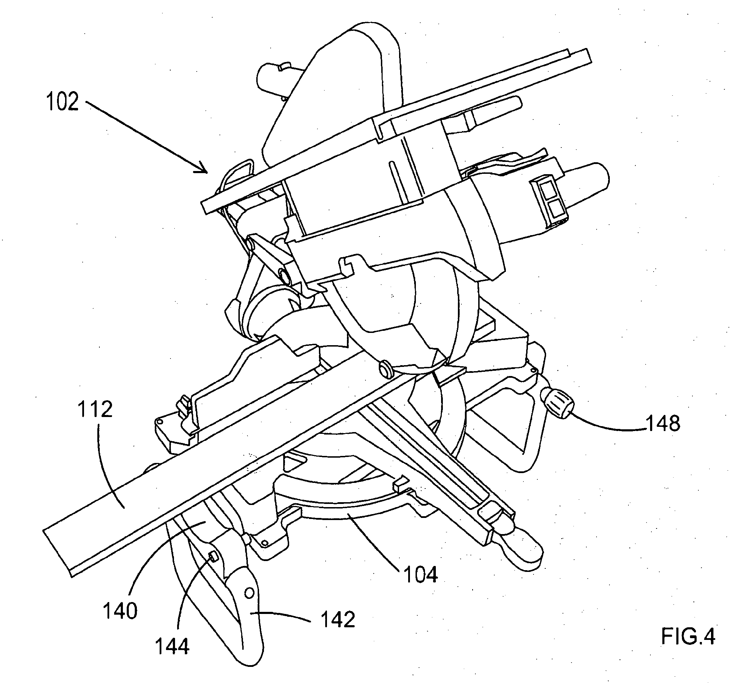

A power saw 102 of a second embodiment of the invention is shown in Figures 3 and 4, in which parts common to the embodiment of Figures 1 and 2 are denoted by like reference numerals but increased by 100. The saw 102 is provided with a pair of handles 126, each of which comprises a base 140 and a C-shaped handle 142 pivotably mounted to the base 140. The base 140 includes a pair of rods 144 which extend generally parallel to each other through respective apertures 146 in the base assembly 104, and the handles 126 can be clamped in a vertical position (not shown) in which the C-shaped handles 142 can be used to carry the saw 102, a horizontal position (Figure 3) in which the handles 142 act as an extension to the base assembly 104 to support a workpiece 112, and a further vertical position (Figure 4) in which the handles 142 support the base assembly 104 in an elevated position. The handles 142 can be clamped into the various positions relative to the base 140 by means of a respective knob 148 which actuates a clamping mechanism (not shown).

## Claims

1. A power saw (2; 102) comprising:-
a first support member (4; 104) for supporting a workpiece (12; 112);
a saw assembly (8) pivotably mounted relative to the first support member (4; 104) and moveable between a raised position and at least one cutting position to enable a saw blade (10) of the saw assembly (8) to engage a workpiece (12; 112) supported by the first support member (4; 104);
a motor (6) for driving a saw blade (10) of the saw assembly (8); and
at least one second support member (26; 126) pivotably mounted relative to said first support member (4; 104) **characterized in that** said second support member (26; 126) is moveable relative to the first support member (4; 104) between at least two of:-
(i) a respective first position in which at least part of said second support member (26; 126) is adapted to be used as a carrying handle for the power saw (2; 102);
(ii) a respective second position in which the second support member (26; 126) is adapted to support a workpiece (12; 112) for cutting by the saw assembly (8); and
(iii) a respective third position in which the second support member (26; 126) is adapted to support the first support member (4; 104) on a floor in a raised position compared to when the second support member (26; 126) is in the first or second position thereof.

2. A power saw (2; 102) according to claim 1, wherein the power saw (2; 102) comprises a plurality of said second support members (26; 126) such that said second support members (26; 126) in respective said second positions thereof and said first support member (4; 104) are adapted to support a workpiece (12; 112).

3. A power saw (2; 102) according to claim 1 or 2, wherein the power saw (2; 102) comprises a plurality of said second support members (26; 126), wherein a plurality of said second support members (26; 126) in respective said second positions thereof are adapted to extend substantially horizontally from said first support member (4; 104) in use.

4. A power saw (2; 102) according to any one of the preceding claims, wherein at least one said second support member (26; 126) comprises a respective body having a respective first portion (28) pivotably mounted relative to the first support member (4; 104), a respective second portion (30) spaced from said first portion (28) and adapted to support a workpiece (12; 112) in said second position thereof, and a respective third portion (32) connecting said first (28) and second (30) portions.

5. A power saw (2; 102) according to any one of the preceding claims, wherein at least one said second support member (26; 126) is tubular.

6. A power saw (2; 102) according to any one of the preceding claims, wherein at least one said second support member (26; 126) is adapted to be locked in said first and/or said second and/or said third position thereof.

7. A power saw (2; 102) according to claim 6, wherein at least one said second support member (26; 126) is adapted to be locked in said first and/or said second and/or said third position thereof by means of a respective clamping mechanism.

8. A power saw (2; 102) according to any one of the preceding claims, wherein the power saw (2; 102) comprises a plurality of said second support members (26; 126) mounted to opposite ends of rods extending through apertures through said first support member (4; 104).

## Patentansprüche

1. Eine Motorsäge (2, 102), umfassend:
- ein erstes Trägerglied (4, 104) zur Aufnahme eines Werkstücks (12, 112);
- eine Sägeeinheit (8), die in Bezug auf das erste Trägerglied (4, 104) schwenkbar montiert ist, und die zwischen einer erhöhten Position und mindestens einer Sägeposition beweglich ist, um dem Sägeblatt (10) der Sägeeinheit (8) zu ermöglichen, sich in ein Werkstück (12, 112) zu engagieren, welches vom ersten Trägerglied (4, 104) aufgenommen wird;
- ein Motor (6) zum Antrieb des Sägeblatts (10) der Sägeeinheit (8); und
- mindestens ein zweites Trägerglied (26, 126), das in Bezug auf das erste Trägerglied (4, 104) schwenkbar montiert ist, **dadurch gekennzeichnet, dass** besagtes zweites Trägerglied (26, 126) in Bezug auf das erste Trägerglied (4, 104) beweglich ist, und zwar zwischen mindestens zwei der nachfolgenden Positionen:
(i) eine entsprechende erste Position, in der mindestens ein Teil des besagten zweiten Trägerglieds (26, 126) geeignet ist, als Trägergriff für die Motorsäge (2, 102) verwendet werden zu können;
(ii) eine entsprechende zweite Position, in der das besagte zweite Trägerglied (26, 126) geeignet ist, ein Werkstück (12, 112) aufzunehmen, welches von der Sägeeinheit (8) gesägt wird; und
(iii) eine entsprechende dritte Position, in welcher das zweite Trägerglied (26, 126) geeignet ist, das erste Trägerglied (4, 104) auf eine Fläche in erhöhter Position aufzunehmen, verglichen damit, wenn das zweite Trägerglied (26, 126) sich in der ersten oder zweiten Position befindet.

2. Eine Motorsäge (2, 102) gemäß Anspruch 1, **dadurch gekennzeichnet, dass** die Motorsäge (2, 102) eine Mehrzahl an besagten zweiten Trägergliedern (26, 126) umfasst, derart, dass die besagten zweiten Trägerglieder (26, 126) in den entsprechenden zweiten Positionen, sowie das besagte erste Trägerglied (4, 104) geeignet sind, ein Werkstück (12, 112) aufzunehmen.

3. Eine Motorsäge (2, 102) gemäß Anspruch 1 oder 2, **dadurch gekennzeichnet, dass** die Motorsäge (2, 102) eine Mehrzahl an besagten zweiten Trägergliedern (26, 126) umfasst, wobei besagte Mehrzahl an besagten zweiten Trägergliedern (26, 126) in den entsprechenden besagten zweiten Positionen geeignet sind, sich horizontal wesentlich über das besagte erste Trägerglied (4, 104) in Verwendung zu erstrecken.

4. Eine Motorsäge (2, 102) gemäß einem der vorstehenden Ansprüche, **dadurch gekennzeichnet, dass** mindestens ein besagtes zweites Trägerglied (26, 126) einen entsprechenden Körper umfasst, der in einem entsprechenden ersten Teil (28) schwenkbar in Bezug auf das erste Trägerglied (4, 104) montiert ist, der in einem entsprechenden zweiten Teil (30) sich in Entfernung zum besagten ersten Teil (28) befindet, und geeignet ist, ein Werkstück (12, 112) in besagter zweiter Position aufzunehmen, sowie in einem entsprechenden dritten Teil (32) den besagten ersten Teil (28) und besagten zweiten (30) Teil verbindet.

5. Eine Motorsäge (2, 102) gemäß einem der vorstehenden Ansprüche, **dadurch gekennzeichnet, dass** mindestens eines der besagten zweiten Trägerglieder (26, 126) rohrförmig ist.

6. Eine Motorsäge (2, 102) gemäß einem der vorstehenden Ansprüche, **dadurch gekennzeichnet, dass** mindestens eines der besagten zweiten Trägerglieder (26, 126) geeignet ist, in besagter ersten und/oder besagter zweiten und/oder besagter dritten Position verriegelt zu werden.

7. Eine Motorsäge (2, 102) gemäß Anspruch 6, **dadurch gekennzeichnet, dass** mindestens eines der besagten zweiten Trägerglieder (26, 126) geeignet ist, in besagter ersten und/oder besagter zweiten und/oder besagter dritten Position mit Hilfe eines entsprechenden Spannmechanismus verriegelt zu werden.

8. Eine Motorsäge (2, 102) gemäß einem der vorstehenden Ansprüche, **dadurch gekennzeichnet, dass** die Motorsäge (2, 102) eine Mehrzahl an besagten zweiten Trägergliedern (26, 126) umfasst, die auf entgegengesetzten Enden von Stangen montiert sind, welche sich durch Öffnungen in besagtem ersten Trägerglied (4, 104) erstrecken.

## Revendications

1. Scie électrique (2 ; 102) comprenant :
un premier élément de support (4 ; 104) pour supporter une pièce de travail (12 ; 112) ;
un ensemble scie (8) monté de manière pivotante par rapport au premier élément de support (4 ; 104) et mobile entre une position élevée et au moins une position de coupe pour permettre à une lame de scie (10) de l'ensemble scie (8) de mettre en prise une pièce de travail (12 ; 112) supportée par le premier élément de support (4 ; 104) ;
un moteur (6) pour entraîner une lame de scie (10) de l'ensemble scie (8) ; et
au moins un second élément de support (26 ; 126) monté de manière pivotante par rapport audit premier élément de support (4 ; 104) **caractérisé en ce que** ledit second élément de support (26 ; 126) est mobile par rapport au premier élément de support (4 ; 104) entre au moins deux de :
(i) une première position respective dans laquelle au moins une partie dudit second élément de support (26 ; 126) est conçue pour être utilisée comme une poignée de transport pour la scie électrique (2 ; 102) ;
(ii) une deuxième position respective dans laquelle le second élément de support (26 ; 126) est conçu pour supporter une pièce de travail (12 ; 112) à couper par l'ensemble scie (8) ; et
(iii) une troisième position respective dans laquelle le second élément de support (26 ; 126) est conçu pour supporter le premier élément de support (4 ; 104) sur un plancher dans une position élevée en comparaison à lorsque le second élément de support (26 ; 126) est dans la première ou seconde position de ce dernier.

2. Scie électrique (2 ; 102) selon la revendication 1, dans laquelle la scie électrique (2 ; 102) comprend une pluralité de dits seconds éléments de support (26 ; 126) de sorte que lesdits seconds éléments de support (26 ; 126) dans lesdites secondes positions respectives de ces derniers et ledit premier élément de support (4 ; 104) sont conçus pour supporter une pièce de travail (12 ; 112).

3. Scie électrique (2 ; 102) selon la revendication 1 ou 2, dans lequel la scie électrique (2 ; 102) comprend une pluralité desdits seconds éléments de support (26 ; 126), dans laquelle une pluralité desdits seconds éléments de support (26 ; 126) dans lesdites secondes positions respectives de ces derniers sont conçues pour s'étendre sensiblement horizontalement à partir dudit premier élément de support (4 ; 104) en fonctionnement.

4. Scie électrique (2 ; 102) selon l'une quelconque des revendications précédentes, dans laquelle au moins un dit second élément de support (26 ; 126) comprend un corps respectif ayant une première partie respective (28) monté de manière pivotante par rapport au premier élément de support (4 ; 104), une seconde partie respective (30) espacée de ladite première partie (28) et conçue pour supporter une pièce de travail (12 ; 112) dans ladite seconde position de cette dernière, et une troisième partie respective (32) reliant lesdites première (28) et seconde (30) parties.

5. Scie électrique (2 ; 102) selon l'une quelconque des revendications précédentes, dans laquelle ledit second élément de support (26 ; 126) est tubulaire.

6. Scie électrique (2 ; 102) selon l'une quelconque des revendications précédentes, dans laquelle au moins un dit second élément de support (26 ; 126) est conçu pour être verrouillé dans ladite première et/ou ladite deuxième et/ou ladite troisième position de ce dernier.

7. Scie électrique (2 ; 102) selon la revendication 6, dans laquelle au moins un dit second élément de support (26 ; 126) est conçu pour être verrouillé dans ladite première et/ou ladite deuxième et/ou ladite troisième position de ce dernier au moyen d'un mécanisme de serrage respectif.

8. Scie électrique (2 ; 102) selon l'une quelconque des revendications précédentes, dans laquelle la scie électrique (2 ; 102) comprend une pluralité desdits seconds éléments de support (26 ; 126) montés sur des extrémités opposées de tiges s'étendant à travers des ouvertures à travers ledit premier élément de support (4 ; 104).
